# EUROPÄISCHE PATENTSCHRIFT

(11) **EP 2 614 263 B1**
(45) Veröffentlichungstag und Bekanntmachung des Hinweises auf die Patenterteilung: **21.01.2015**
(21) Anmeldenummer: 11738694.6
(22) Anmeldetag: 25.07.2011
(51) Int. Cl.: F16B 7/18, B62D 7/16, F16C 7/06, B60G 7/00, B62D 7/20, F16B 2/06

(54) **SCHELLENLOSER KLEMMVERBAND**
BRACKET-LESS CLAMPING ASSEMBLY
ASSEMBLAGE À SERRAGE SANS COLLIER

(30) Priorität: 08.09.2010 DE 102010040419
(43) Veröffentlichungstag der Anmeldung: 17.07.2013
(73) Patentinhaber: ZF Friedrichshafen AG, 88038 Friedrichshafen (DE)
(72) Erfinder: BRUNNEKE, Hans-Gerd, 49124 Georgsmarienhütte (DE)
(86) Internationale Anmeldenummer: PCT/EP2011/062729
(87) Internationale Veröffentlichungsnummer: WO 2012/031822

(56) Entgegenhaltungen:
- EP-A1- 1 553 310
- BE-A- 393 795
- DE-U1- 8 711 928
- DE-U1- 9 017 038
- JP-A- 2000 199 507
- US-B1- 6 302 614

## Beschreibung

Die Erfindung betrifft einen Klemmverband an einem Strebenelement zur koppelnden Verbindung von Baugruppen oder Bauteilen, beispielsweise von Fahrwerksteilen. Der Klemmverband umfasst gemäß dem Oberbegriff von Patentanspruch 1 den Endbereich einer rohrförmigen Strebe des Strebenelements, sowie einen Gewindebolzen.

Strebenelemente, durch die verschiedene Bauteile oder Baugruppen miteinander verbunden werden, sind aus dem Stand der Technik (siehe z.B. JP 2000 199507 A) bekannt.

Dabei kann es sich um starre Streben wie beispielsweise Gerüststreben oder Bodenstützen handeln, die im Wesentlichen unbeweglich zwischen Bauteilen angeordnet werden und dadurch Relativbewegungen der Bauteile zueinander verhindern.

Ebenso aus dem Stand der Technik bekannt sind bewegliche Strebenelemente wie beispielsweise Koppelstützen, Pendelstützen, Fahrwerksstreben und Lenk- oder Spurstangen, die zumeist an beiden Enden beweglich bzw. gelenkig mit den entsprechenden Anschlussbauteilen oder -Baugruppen verbunden sind, beispielsweise um die Anschlussbauteile bezüglich eines Bewegungsfreiheitsgrads miteinander zu koppeln, oder um die Position bzw. die Winkelstellung von Baugruppen - wie beispielsweise Radträgern am Kraftfahrzeug - zu steuern.

Insbesondere im Fahrzeugbau werden hohe Ansprüche an derartige Strebenelemente gestellt, darunter vor allem hohe Belastbarkeit und Dauerfestigkeit, hohe Sicherheit gegen Versagen ebenso wie hohe Korrosionsbeständigkeit. Gleichzeitig sollen derartige Strebenelemente möglichst wenig Bauraum in Anspruch nehmen, um mögliche Kollisionen mit benachbarten Baugruppen zu vermeiden, bzw. um die Bewegungsfreiheit anderer Bauteile und Baugruppen - insbesondere im Bereich des Fahrwerks - nicht einzuschränken. Eine generelle Anforderung an derartige Strebenelemente ist zumeist auch die Längsverstellbarkeit, die üblicherweise mittels einer Zweiteilung der Strebe unter Gewindeverbindung der beiden Teile realisiert ist.

Aus dem Stand der Technik sind Lenk- und Spurstangen, bzw. allgemein Strebenelemente bekannt, bei denen eine zumeist rohrförmige Strebe an einem oder an beiden Enden ein Innengewinde erhält, welches der Aufnahme eines Gewindebolzens dient. Der Gewindebolzen kann wiederum mit Anschlussbauteilen verbunden sein, beispielsweise mit dem Kugelkopf eines Kugelgelenks. Zur Einstellung der gewünschten Länge des Strebenelements, beispielsweise um die Radgeometrie oder den Lenkwinkel am Kraftfahrzeug justieren zu können, wird der Gewindebolzen bis zur Erreichung der gewünschten Strebenlänge in das Gewinde der rohrförmigen Strebe eingeschraubt. Um Spiel oder selbsttätige Verstellung des Strebenelements zu unterbinden, ist anschließend die spielfreie und feste Fixierung des Gewindebolzens im Innengewinde der Strebe erforderlich.

Im Stand der Technik wird diese Anforderung üblicherweise dadurch erfüllt, dass der mit dem Innengewinde versehene Endbereich der Strebe einen axialen Schlitz aufweist, wobei gleichzeitig strebenaußenseitig im Bereich des Innengewindes bzw. des axialen Schlitzes der Strebe eine Klemmschelle angeordnet wird. Durch Anziehen der Klemmschelle (mit dem Gewindebolzen in der gewünschten Einschraubtiefe) wird die Strebe im Bereich ihres Innengewindes somit - den Gewindebolzen festklemmend - radial komprimiert.

Diese aus dem Stand der Technik bekannte Fixierung des Gewindebolzens eines Strebenelements in der gewünschten Axialposition weist jedoch Nachteile auf. So ist mit der erforderlichen axialen Schlitzung des Gewindebereichs der Strebe zunächst einmal eine nicht unerhebliche Schwächung des Strebenendes bezüglich Torsion, Biegung und Knickfestigkeit verbunden. Ferner werden durch den Axialschlitz im Gewindebereich Angriffsflächen für Korrosion geschaffen, indem Wasser oder andere korrosive Medien an das Gewinde der Strebe bzw. des Gewindebolzens, oder sogar in das Innere der Strebe gelangen können. Hierdurch kann eine weitere Schwächung der Strebe erfolgen, oder Streben-Innengewinde und Gewindebolzen können festkorrodieren, was die spätere Verstellung oder Demontage des Strebenelements erschweren kann.

Ferner benötigt die zur Kompression des Strebenendes im Gewindebereich erforderliche Klemmschelle üblicherweise erheblichen Bauraum, wodurch sich der vom Strebenelement in diesem Bereich beanspruchte Raum häufig nahezu verdoppelt. Hierdurch kann es zu Kollisionen mit benachbarten Bauteile oder Baugruppen kommen, zumal die Winkelposition der Klemmschelle im Gewindebereich der Strebe üblicherweise nicht näher definiert bzw. festgelegt ist. Die Klemmschelle kann somit prinzipiell in beliebigen Richtungen von der Strebe abstehen, was wiederum bei Konstruktion und Kollisionsprüfung des Package der umgebenden Baugruppen berücksichtigt werden muss.

Schließlich ist zur sicheren und ordnungsgemäßen Montage derartiger Streben üblicherweise eine umlaufende Ringnut im Gewindebereich am Strebenende erforderlich, um bei der Montage der Klemmschelle eine definierte Axialposition der Klemmschelle zu gewährleisten. Sowohl die Anbringung des Axialschlitzes als auch der Ringnut stellen dabei nicht nur eine Schwächung des Strebenendes dar, sondern erfordern auch zusätzliche Arbeitsschritte bei der Produktion, mit denen entsprechende Bearbeitungskosten verbunden sind.

Mit diesem Hintergrund ist es Aufgabe der vorliegenden Erfindung, einen Klemmverband für ein Strebenelement bereitzustellen, mit dem die genannten, im Stand der Technik vorhandenen Einschränkungen und Nachteile überwunden werden. Der erfindungsgemäße Klemmverband soll dabei die Strebe und den Gewindebolzen des Strebenelements sicher und fest verbinden, ohne zu Schwächungen der Strebenstruktur zu führen oder Angriffsbereiche für Korrosion zu schaffen. Überdies soll der erfindungsgemäße Klemmverband mit einem Minimum an Bauraum auskommen, er soll leicht montierbar sein und mit geringen Herstellungskosten produziert werden können.

Diese Aufgabe wird durch einen Klemmverband mit den Merkmalen des Patentanspruchs 1 gelöst. Bevorzugte Ausführungsformen sind Gegenstand der Unteransprüche.

In für sich genommen zunächst bekannter Weise ist der Klemmverband Teil eines Strebenelements zur koppelnden Verbindung von Baugruppen oder Bauteilen, und umfasst einen Endbereich einer im Wesentlichen rohrförmigen Strebe sowie einen Gewindebolzen zur Verbindung mit der rohrförmigen Strebe.

Erfindungsgemäß jedoch zeichnet sich der Klemmverband durch eine im Endbereich der rohrförmigen Strebe in einem radialen Ringspalt zwischen dem Gewindebolzen und dem Innenquerschnitt der Strebe angeordnete Gewindehülse aus. Die Gewindehülse besitzt ein konisches Außengewinde sowie ein zum Gewinde des Gewindebolzens passendes Innengewinde, und ist zumindest im Bereich ihres strebenseitigen Endes radial elastisch ausgeführt. Das Strebenende weist dabei ein zum Außengewinde der Gewindehülse passendes, konisches Innengewinde auf.

Der erfindungsgemäße Klemmverband ermöglicht somit die Montage von Strebe und Gewindebolzen mittels eines am Strebenende angeordneten konischen Innengewindes und einer darin angeordneten Gewindehülse mit konischer Außenkontur. Hierzu nimmt die Gewindehülse mittels ihres Innengewindes den Gewindebolzen des Strebenelements auf. Der Gewindebolzen kann sodann zunächst noch in der gewohnten Weise bis zur gewünschten Tiefe in das Strebenende - bzw. in die dort angeordnete Gewindehülse - eingeschraubt werden, um auf diese Weise die gewünschte Länge des Strebenelements einzustellen.

Nach Erreichen der gewünschten Einschraubtiefe bzw. der gewünschten wirksamen Länge des Strebenelements wird sodann die im konischen Innengewinde am Ende der Strebe angeordnete Gewindehülse festgezogen. Aufgrund der zumindest teilweise bzw. an ihrem strebenseitigen Ende radial elastisch ausgebildeten Gewindehülse - sowie aufgrund der konischen Gewinde von Strebe und Gewindehülse - erfolgt dabei eine radiale Kompression der Gewindehülse und damit eine reibschlüssige Fixierung des Gewindebolzens relativ zur rohrförmigen Strebe.

Dies bedeutet mit anderen Worten, dass dank der Erfindung eine feste Verbindung zwischen der Strebe und dem Gewindebolzen hergestellt werden kann, ohne dass hierzu eine Schlitzung am Strebenende oder die Verwendung einer Klemmschelle erforderlich ist. Die mit der Schlitzung verbundene Schwächung der Strebe und die damit geschaffene Angriffsfläche für Korrosion entfällt damit ebenso wie die bisher übliche, umlaufende Nut am Strebenende zur Fixierung der Klemmschelle. Mit dem Wegfall der Klemmschelle wird zudem entscheidend der im Bereich des Strebenendes benötigte Bauraum reduziert, und es entfällt die mit den bisher üblichen Klemmschellen verbundene Kollisionsgefahr mit benachbarten Bauteilen oder Baugruppen.

Vorzugsweise sind dabei Streben-Innengewinde und Gewindehülsen-Außengewinde kegelabschnittsförmig ausgebildet, und weisen denselben Kegelwinkel auf. Auf diese Weise lassen sich die Gewinde kostengünstig herstellen, und die Gewindehülse kann zunächst leichtgängig in das Innengewinde am Strebenende eingeschraubt werden, wonach der Gewindebolzen bis auf die gewünschte Einschraubtiefe in die Gewindehülse eingeschraubt wird. Anschließend erfolgt die radiale Verformung der Gewindehülse durch Kontern der Gewindehülse gegenüber der Strebe.

In Abhängigkeit der Ausführung und der Wandstärken bzw. radialen Steifigkeit der Gewindehülse und/oder der Strebe können die Kegelwinkel von Streben-Innengewinde und Hülsen-Außengewinde konstruktiv jedoch auch geringfügig unterschiedlich ausgelegt werden. Hierdurch kann beispielsweise ein am äußersten Strebenende mögliches radiales Aufweiten des Strebendurchmessers aufgrund der dort radial ggf. nicht mehr elastischen Gewindehülse - und eine damit ggf. verbundene Schwergängigkeit beim Kontern der Gewindehülse gegen die Strebe - reduziert oder vermieden werden. Aus denselben Gründen kann für die Gewindeform des Außengewindes der Gewindehülse und/oder des Streben-Innengewindes eine von der Kegelform geringfügig abweichende Gestalt gewählt werden. Beispielsweise kann das Streben-Innengewinde kegelförmig und das Hülsen-Außengewinde kegelförmig mit einer balligen Überlagerung ausgeführt werden, um so insbesondere Spannungsspitzen beim Kontern der Gewindehülse gegen die Strebe zu vermeiden.

Die Erfindung wird weiter unabhängig davon verwirklicht, auf welche Weise die radiale Elastizität der Gewindehülse zumindest im Bereich ihres strebenseitigen Endes realisiert ist. Vorzugsweise jedoch weist die Gewindehülse hierzu im Bereich ihres strebenseitigen Endes zumindest einen radialen Schlitz auf. Besonders bevorzugt besitzt die Gewindehülse im Bereich ihres strebenseitigen Endes eine Mehrzahl radialer Schlitze, die gleichmäßig entlang des Umfangs der Gewindehülse angeordnet sind. Auf diese Weise wird die Funktion des Außen- wie auch des Innengewindes der Gewindehülse nicht beeinträchtigt, und gleichzeitig wird die zur formschlüssigen Fixierung des Gewindebolzens im Strebenende erforderliche radiale Nachgiebigkeit der Gewindehülse ermöglicht.

Die axiale Länge des zumindest einen radialen Schlitzes der Gewindehülse - bzw. die Länge der entlang des Hülsenumfangs verteilten mehreren radialen Schlitze - beträgt dabei vorzugsweise mehr als die Hälfte, besonders bevorzugt mehr als zwei Drittel der axialen Länge der Gewindehülse. Dadurch, dass der radiale Schlitz bzw. die radialen Schlitze der Gewindehülse einen möglichst großen Teil der Länge der Gewindehülse einnehmen, wird die zur effektiven Klemmung des Gewindebolzens im Strebenende erforderliche radiale Elastizität der Gewindehülse optimal gewährleistet.

Gemäß weiterer bevorzugter Ausführungsformen der Erfindung weist die Gewindehülse einen Bundbereich mit zumindest einer Schlüsselfläche, bzw. weist die Strebe einen Schlüsselbereich mit zumindest einer Schlüsselfläche auf. Auf diese Weise wird die Montage des Klemmverbands bzw. das Kontern der Gewindehülse gegenüber der Strebe erleichtert, indem das hierzu erforderliche Drehmoment über entsprechende Schlüsselflächen an der Gewindehülse und/oder an der Strebe eingeleitet werden kann.

Eine weitere, besonders bevorzugte Ausführungsform der Erfindung sieht vor, dass am Außenumfang der Strebe im Verbindungsbereich mit der Gewindehülse ein Verstärkungsring angeordnet ist. Der somit im Bereich des konischen Innengewindes am Strebenende oder nahe des Strebenendes angeordnete Verstärkungsring dient - insbesondere bei dünnwandigen Streben - der Verstärkung des Strebenendes in radialer Richtung. Da beim Kontern der Gewindehülse gegen die Strebe aufgrund der konischen Gewinde von Strebe und Gewindehülse eine radialer Druck nach innen auf den Gewindebolzen und nach außen auf die Wandung der Strebe aufgebaut wird, könnte dies bei dünnwandigen Streben andernfalls zu einem unerwünschten Aufweiten des Strebenendes und einer damit eventuell verbundenen Lockerung des Klemmverbands führen, was somit durch den Verstärkungsring unterbunden wird.

Mit diesem Hintergrund sieht eine weitere bevorzugte Ausführungsform der Erfindung vor, dass die zumindest eine strebenseitige Schlüsselfläche am Verstärkungsring angeordnet ist. Auf diese Weise wird - insbesondere wieder bei dünnwandigen Streben - eine etwaige Schwächung der Strebe durch die Anbringung von Schlüsselflächen vermieden, indem die Schlüsselflächen nicht unmittelbar an der Strebe, sondern an dem auf der Strebe angeordneten Verstärkungsring angebracht werden, an dem eine hierzu ausreichende Wandstärke zur Verfügung steht. Zum Zweck der sicheren Übertragung des Drehmoments vom Verstärkungsring auf die Strebe kann der Verstärkungsring ggf. noch stoffschlüssig mit der Strebe verbunden werden, beispielsweise durch Schweißpunkte oder dergleichen.

Eine weitere bevorzugte Ausführungsform der Erfindung sieht vor, dass die Gewindesteigungen des Außengewindes und des Innengewindes der Gewindehülse gleich groß sind. Auf diese Weise kann bei der Montage des Klemmverbands die abschließende Konterung der Gewindehülse und der Strebe erfolgen, ohne dass hierdurch die axiale Relativposition von Gewindebolzen und Strebe verändert wird. Voraussetzung für diese Ausführungsform (jedoch nicht Voraussetzung zur Verwirklichung der Erfindung) ist, dass Außengewinde und Innengewinde der Gewindehülse die gleiche Gewinde-Steigungsrichtung aufweisen, dass somit sowohl Außengewinde als auch Innengewinde der Gewindehülse als Rechtsgewinde, oder dass beide Gewinde als Linksgewinde ausgeführt sind.

Eine weitere Ausführungsform der Erfindung sieht vor, dass das Außengewinde und/oder das Innengewinde der Gewindehülse mit einer stoffschlüssigen Schraubensicherung versehen sind. Eine derartige stoffschlüssige Schraubensicherung, bei der es sich insbesondere um einen Gewindekleber handeln kann, wird zwischen die Gewindegänge der Strebe und der Gewindehülse bzw. zwischen die Gewindegänge des Gewindebolzens und der Gewindehülse eingebracht, und verhindert nach der Aushärtung bzw. Polymerisation zusätzlich das ungewollte Lösen der Gewindeverbindung zwischen Strebe und Gewindehülse bzw. zwischen Gewindebolzen und Gewindehülse.

Die Erfindung ist prinzipiell unabhängig von Konstruktion und Einsatzzweck des Strebenelements. Besonders bevorzugt jedoch handelt es sich bei dem Gewindebolzen um einen Teil eines Lagerbauteils als Bestandteil des Strebenelements. Bei dem Lagerbauteil, welches der Krafteinleitung in das Strebenelement bzw. der Anbindung des Strebenelements an Anschlussbauteile dient, kann es sich dabei insbesondere um ein Elastomerlager oder um ein Kugelgelenk handeln. Der Gewindebolzen kann gemäß dieser Ausführungsform somit insbesondere einstückig angeformtes Teil einer Gelenkpfanne oder eines Gelenkgehäuses für ein Kugelgelenk oder Elastomergelenk sein.

Eine weitere besonders bevorzugte Ausführungsform der Erfindung sieht vor, dass der Klemmverband Teil einer Fahrwerksstrebe, beispielsweise einer Lenk- oder Spurstange insbesondere zur koppelnden Verbindung von Fahrwerksteilen ist. Diese Ausführungsform hat den Hintergrund, dass sich der erfindungsgemäße Klemmverband mit besonderem Vorteil im Bereich des Fahrwerks bzw. der Radaufhängung von Kraftfahrzeugen einsetzen lässt, da hier die entscheidenden erfindungsgemäßen Vorteile - insbesondere erhebliche Bauraumersparnis, erhöhte Korrosionsbeständigkeit und massiv verringerte Kollisionsgefahr mit benachbarten Bauteilen - besonders gut zur Anwendung gebracht werden können.

Im Folgenden wird die Erfindung anhand lediglich Ausführungsbeispiele darstellender Zeichnungen näher erläutert. Dabei zeigt:
- Fig. 1: in schematischer, teilweise geschnittener Darstellung den Endbereich eines Strebenelements mit einer Ausführungsform des erfindungsgemäßen Klemmverbands;
- Fig. 2: einen Längsschnitt durch Strebenende und Klemmverband des Strebenelements gemäß Fig. 1;
- Fig. 3: in Explosionsdarstellung den Klemmverband des Strebenelements gemäß Fig. 1 und 2;
- Fig. 4: in isometrischer Darstellung die Gewindehülse des Klemmverbands gemäß Fig. 1 bis 3; und
- Fig. 5: die Gewindehülse gemäß Fig. 4 in einer bezüglich Fig. 4 rückwärtigen Ansicht.

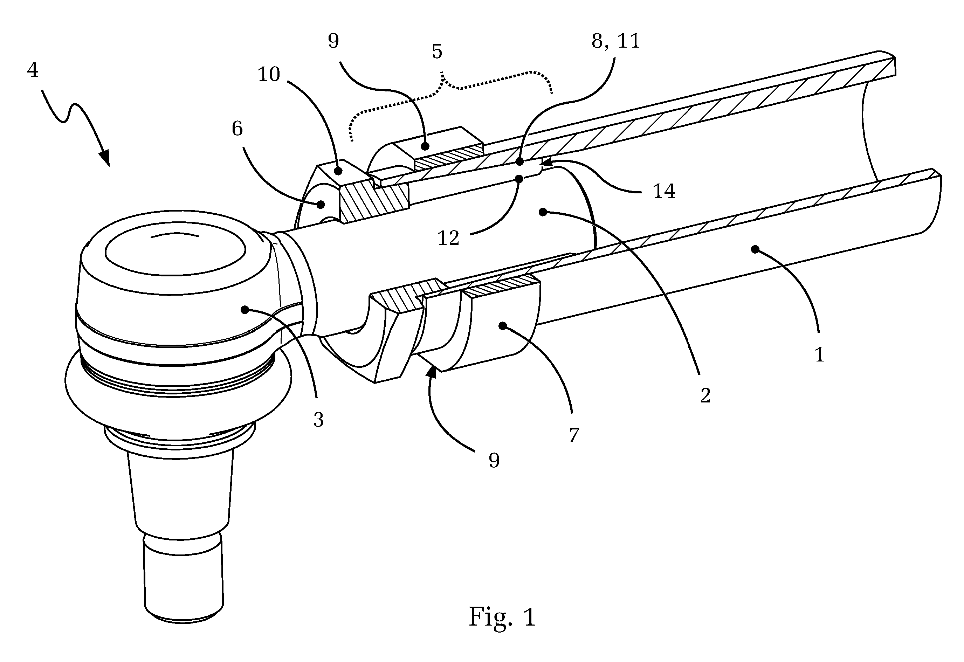

Fig. 1 zeigt den Endbereich eines Strebenelements mit dem dort angeordneten Klemmverband in einer erfindungsgemäßen Ausführung. Als Bestandteile des Strebenelements erkennt man zunächst einmal die rohrförmige Strebe 1 sowie den in deren Endbereich 5 angeordneten Gewindebolzen 2. Der Gewindebolzen 2 ist bei der dargestellten Ausführungsform einstückig angeformter Teil des Gelenkgehäuses 3 eines Kugelgelenks 4.

In einem radialen Ringspalt zwischen dem Endbereich 5 der Strebe 1 und dem Gewindebolzen 2 ist erfindungsgemäß eine Gewindehülse 6 mit Innengewinde 12 und Außengewinde 8 angeordnet. In den Darstellungen der Fig. 1, 3, 4 und 5 sind dabei - der besseren Übersichtlichkeit halber - die Gewinde an Gewindebolzen 2, Strebe 1 und Gewindehülse 6 nicht eigens dargestellt.

In Fig. 1 erkennt man ferner einen am Endbereich 5 der Strebe 1 angeordneten Verstärkungsring 7. Bei der dargestellten Ausführungsform des Klemmverbands dient der Verstärkungsring 7 einerseits der radialen Verstärkung der Wandung der rohrförmigen Strebe 1 in deren Endbereich 5, da die Strebenwandung im Bereich 5 durch das an der Gewindehülse 6 angeordnete konische Außengewinde 8 beim Kontern des Klemmverbands 2, 5, 6 nach radial außen erweitert bzw. beansprucht wird, und in diesem Bereich zudem eine zum Strebenende hin abnehmende Wandstärke aufweist. Eine weitere Aufgabe des Verstärkungsrings 7 besteht bei der dargestellten Ausführungsform darin, die strebenseitigen Schlüsselflächen 9 bereitzustellen, mit denen die Strebe 1 beim Kontern der Gewindehülse 6 - anhand derer Schlüsselflächen 10 - gegengehalten werden kann.

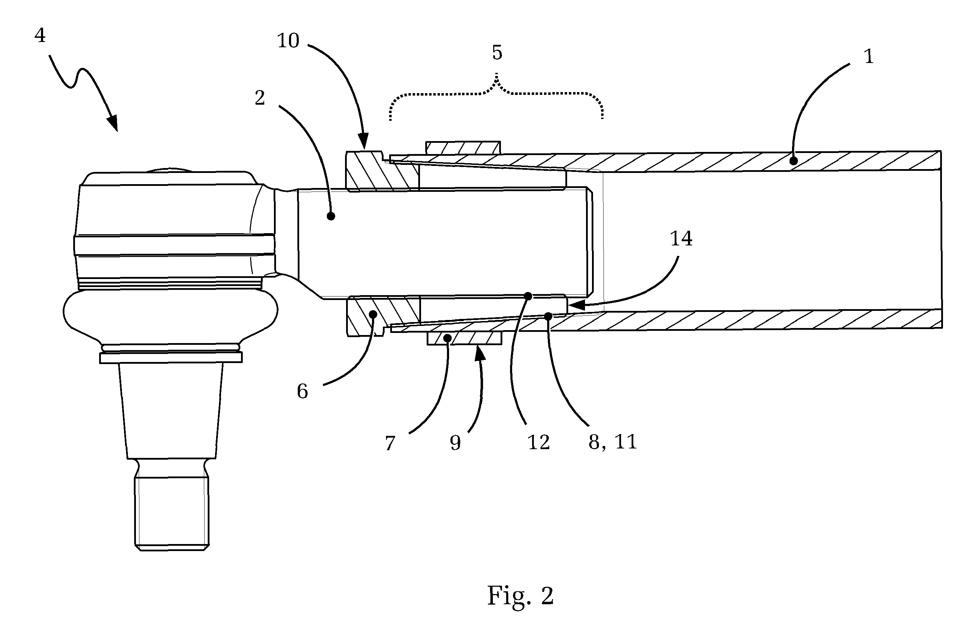

Fig. 2 zeigt den Klemmverband gemäß Fig. 1 nochmals im Längsschnitt. Man erkennt die Strebe 1 mit dem darauf angeordneten Verstärkungsring 7, den Gewindebolzen 2 des Kugelgelenks 4 sowie die im Ringspalt zwischen Gewindebolzen 2 und rohrförmiger Strebe 1 angeordnete Gewindehülse 6. Die Gewindehülse 6 weist an ihrem Außenumfang ein konisch verlaufendes Außengewinde 8 auf, welches in ein passendes, ebenfalls konisches Innengewinde 11 der Strebe 1 im Verbindungsbereich 5 eingeschraubt ist.

Am Innenumfang besitzt die Gewindehülse 6 ein Innengewinde 12, welches passend zum zylindrischen Gewinde des Gewindebolzens 2 ausgebildet ist. Zur Montage des Strebenelements wird dabei zunächst die Gewindehülse 6 lose in das konische Innengewinde 11 der Strebe 1 eingeschraubt. Anschließend kann das Kugelgelenk 4 mittels des Gewindebolzens 2 in die Gewindehülse 6, bzw. somit in das Strebenende 1, bis zur gewünschten Einschraubtiefe bzw. bis zur erforderlichen Strebenlänge eingeschraubt werden. Auf diese Weise lässt sich zum Beispiel der Spurwinkel einer Achse eines Kraftfahrzeugs einstellen, falls es sich bei dem Strebenelement um eine Lenk- oder Spurstange handelt. Das Außengewinde 8 der Gewindehülse 6 erstreckt sich dabei über den gesamten (konischen) Verbindungsbereich 5 der Gewindehülse 6, während sich das Innengewinde 12 der Gewindehülse 6 über die gesamte Länge der Gewindehülse 6 erstreckt.

Nach der so erfolgten Festlegung der Länge des Strebenelements werden Strebe 1 und Gewindehülse 6 gegeneinander gekontert. Hierzu weist die Strebe 1 die am Verstärkungsring 7 angeordneten Schlüsselflächen 9 und die Gewindehülse 6 einen Bund mit weiteren Schlüsselflächen 10 auf. Durch das Kontern von Strebe 1 und Gewindehülse 6 wird aufgrund der konischen Ausführung des Außengewindes 8 der Gewindehülse 6 und des Innengewindes 11 der Strebe 1 die Gewindehülse in der Strebe 1 - insbesondere im Bereich ihres strebenseitigen Endes 14 - radial komprimiert, wodurch das Innengewinde 11 der Strebe 1, das Außengewinde 8 sowie das Innengewinde 12 der Gewindehülse 6 und das Gewinde des Gewindebolzens 2 radial aufeinandergepresst werden. Hierdurch ergibt sich eine feste, axial formschlüssige und in Umfangsrichtung kraftschlüssige Verbindung zwischen dem Gewindebolzen 2 bzw. dem Kugelgelenk 4 und der Strebe 1.

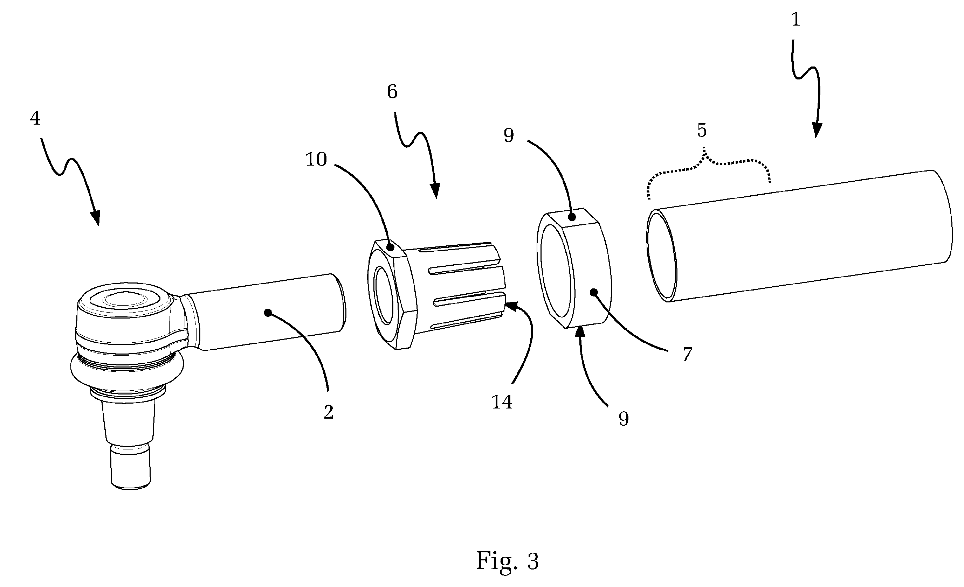

Fig. 3 zeigt den in den Fig. 1 und 2 im Zusammenbau dargestellten Klemmverband nochmals in der Explosionsdarstellung. Hier wird insbesondere die Schlitzung der Gewindehülse 6 deutlich, durch die die Gewindehülse 6 im Verbindungsbereich 5 mit der Strebe 1 ihre zur Klemmung des Gewindebolzens 2 erforderliche radiale Elastizität erhält, wobei die radiale Elastizität der Gewindehülse 6 im Bereich ihres strebenseitigen Endes bei 14 am stärksten ausgeprägt ist.

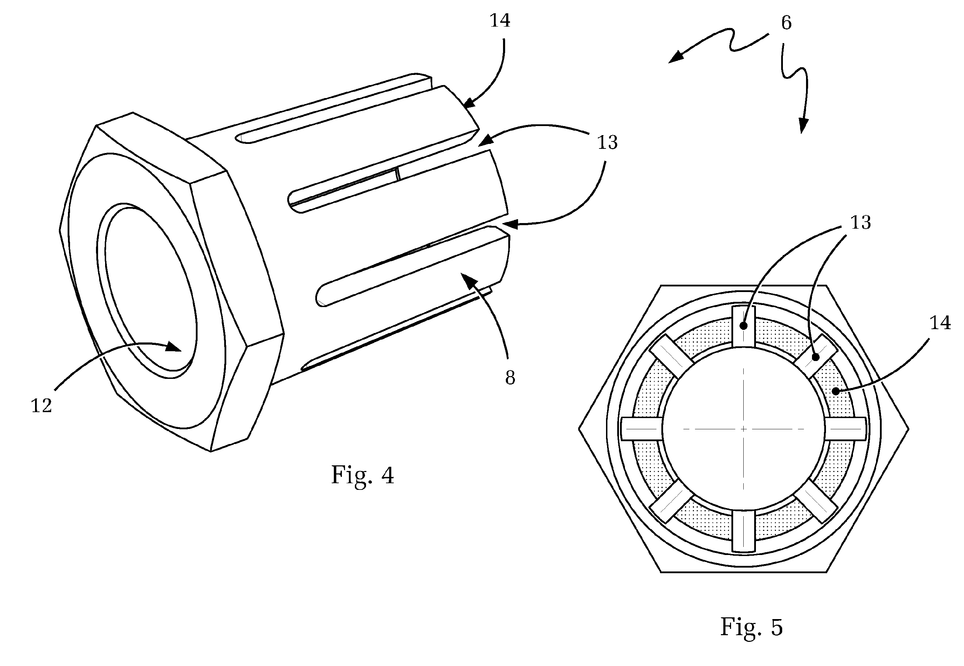

Die Gewindehülse 6 ist nochmals vergrößert in den Fig. 4 und 5 dargestellt. Dabei wurde der besseren Übersichtlichkeit halber auch in den Fig. 4 und 5 wieder auf die zeichnerische Darstellung von Außengewinde 8 und Innengewinde 12 der Gewindehülse 6 verzichtet. Man erkennt die radialen Schlitze 13, die sich über den größten Teil der Länge der Gewindehülse 6 erstrecken. Um die konische Geometrie der Gewindehülse 6 besser zu verdeutlichen, ist in Fig. 5 die rückwärtige Stirnseite 14 der Gewindehülse 6 leicht schattiert dargestellt.

Im Ergebnis wird somit deutlich, dass mit der Erfindung ein Klemmverband geschaffen wird, mit dem sich Strebe und Gewindebolzen eines Strebenelements sicher und dauerhaft fest miteinander verbinden lassen, ohne dass durch den Klemmverband eine Schwächung der Strebenstruktur erfolgt. Der erfindungsgemäße Klemmverband benötigt im Vergleich zu den Grundbauteilen "Strebe" und "Gewindebolzen" nahezu keinen zusätzlichen Bauraum, es entfällt die Notwendigkeit für eine die Strebe schwächende und Angriffsflächen für Korrosion schaffende Anbringung von Schlitzen und/oder Nuten am Strebenende, und die beim Stand der Technik gegebene Kollisionsgefahr der Klemmschelle im Bereich des Strebenendes mit angrenzenden Bauteilen oder Baugruppen wird beseitigt.

### Bezugszeichenliste

- 1: Strebe
- 2: Gewindebolzen
- 3: Gelenkgehäuse
- 4: Kugelgelenk
- 5: Verbindungsbereich
- 6: Gewindehülse
- 7: Verstärkungsring
- 8: Hülsen-Außengewinde
- 9, 10: Schlüsselfläche
- 11: Streben-Innengewinde
- 12: Hülsen-Innengewinde
- 13: Radiale Schlitze
- 14: Hülsen-Stirnfläche, Hülsen-Endbereich

## Patentansprüche

1. Klemmverband eines Strebenelements zur koppelnden Verbindung von Baugruppen oder Bauteilen, der Klemmverband umfassend einen Endbereich (5) einer im Wesentlichen rohrförmigen Strebe (1) sowie einen Gewindebolzen (2),
**gekennzeichnet durch**
eine im Endbereich (5) der rohrförmigen Strebe (1) in einem radialen Ringspalt zwischen dem Gewindebolzen (2) und dem Innenquerschnitt der Strebe (1) angeordnete Gewindehülse (6) mit konischem Außengewinde (8) und dem Gewindebolzen (2) entsprechendem Innengewinde (12), wobei das Strebenende (5) ein dem Außengewinde (8) der Gewindehülse (6) entsprechendes, konisches Innengewinde (11) aufweist, und wobei die Gewindehülse (6) zumindest im Bereich ihres strebenseitigen Endes (14) radial elastisch ausgebildet ist.

2. Klemmverband nach Anspruch 1,
**dadurch gekennzeichnet,**
**dass** das Außengewinde (8) der Gewindehülse (6) und/oder das Innengewinde (11) der Strebe (1) kegelabschnittsförmig ausgebildet sind.

3. Klemmverband nach Anspruch 2,
**dadurch gekennzeichnet,**
**dass** die Kegelwinkel des Streben-Innengewindes (11) und des Gewindehülsen-Außengewindes (8) gleich groß sind.

4. Klemmverband nach einem der Ansprüche 1 bis 3,
**dadurch gekennzeichnet,**
**dass** die Gewindehülse (6) im Bereich ihres strebenseitigen Endes (14) zumindest einen radialen Schlitz (13) aufweist.

5. Klemmverband nach einem der Ansprüche 1 bis 4,
**dadurch gekennzeichnet,**
**dass** die Gewindehülse (6) im Bereich ihres strebenseitigen Endes (14) eine Mehrzahl gleichmäßig entlang ihres Umfangs verteilte radiale Schlitze (13) aufweist.

6. Klemmverband nach Anspruch 4 oder 5,
**dadurch gekennzeichnet,**
**dass** die axiale Länge des zumindest einen radialen Schlitzes (13) der Gewindehülse (6) größer ist als die Hälfte, vorzugsweise größer als zwei Drittel der Länge der Gewindehülse (6).

7. Klemmverband nach einem der Ansprüche 1 bis 6,
**dadurch gekennzeichnet,**
**dass** die Gewindehülse (6) einen Bundbereich mit zumindest einer Schlüsselfläche (10) aufweist.

8. Klemmverband nach einem der Ansprüche 1 bis 7,
**dadurch gekennzeichnet,**
**dass** die Strebe (1) einen Schlüsselbereich mit zumindest einer Schlüsselfläche (9) aufweist.

9. Klemmverband nach einem der Ansprüche 1 bis 8,
**dadurch gekennzeichnet,**
**dass** am Außenumfang der Strebe (1) im Verbindungsbereich (5) mit der Gewindehülse (6) ein Verstärkungsring (7) angeordnet ist.

10. Klemmverband nach Anspruch 8 und 9,
**dadurch gekennzeichnet,**
**dass** die zumindest eine strebenseitige Schlüsselfläche (9) am Verstärkungsring (7) angeordnet ist.

11. Klemmverband nach einem der Ansprüche 1 bis 10,
**dadurch gekennzeichnet,**
**dass** die Gewindesteigungen von Außengewinde (8) und Innengewinde (12) der Gewindehülse (6) gleich groß sind.

12. Klemmverband nach einem der Ansprüche 1 bis 11,
**dadurch gekennzeichnet,**
**dass** Außengewinde (8) und/oder Innengewinde (12) mittels einer stoffschlüssigen Schraubensicherung gesichert sind.

13. Klemmverband nach einem der Ansprüche 1 bis 12,
**dadurch gekennzeichnet,**
**dass** der Gewindebolzen (2) Teil eines Lagerbauteils (4) des Strebenelements ist.

14. Klemmverband nach einem der Ansprüche 1 bis 13,
**dadurch gekennzeichnet,**
**dass** der Klemmverband Teil einer Strebe, beispielsweise einer Lenk- oder Spurstange zur koppelnden Verbindung von Fahrwerksteilen ist.

## Claims

1. Clamping connection of a strut element for the coupling connection of assemblies or components, the clamping connection comprising an end region (5) of a substantially tubular strut (1) and a threaded bolt (2), **characterized by** a threaded sleeve (6) which is arranged in the end region (5) of the tubular strut (1) in a radial annular gap between the threaded bolt (2) and the inner cross section of the strut (1) and has a conical external thread (8) and an internal thread (12) which corresponds to the threaded bolt (2), the strut end (5) having a conical internal thread (11) which corresponds to the external thread (8) of the threaded sleeve (6), and the threaded sleeve (6) being of radially elastic configuration at least in the region of its strut-side end (14).

2. Clamping connection according to Claim 1, **characterized in that** the external thread (8) of the threaded sleeve (6) and/or the internal thread (11) of the strut (1) are/is configured in the shape of a conical section.

3. Clamping connection according to Claim 2, **characterized in that** the cone angle of the strut internal thread (11) and of the threaded-sleeve external thread (8) are equally great.

4. Clamping connection according to one of Claims 1 to 3, **characterized in that** the threaded sleeve (6) has at least one radial slot (13) in the region of its strut-side end (14).

5. Clamping connection according to one of Claims 1 to 4, **characterized in that**, in the region of its strut-side end (14), the threaded sleeve (6) has a plurality of radial slots (13) which are distributed uniformly along its circumference.

6. Clamping connection according to Claim 4 or 5, **characterized in that** the axial length of the at least one radial slot (13) of the threaded sleeve (6) is greater than half, preferably greater than two thirds the length of the threaded sleeve (6).

7. Clamping connection according to one of Claims 1 to 6, **characterized in that** the threaded sleeve (6) has a collar region with at least one key face (10).

8. Clamping connection according to one of Claims 1 to 7, **characterized in that** the strut (1) has a key region with at least one key face (9).

9. Clamping connection according to one of Claims 1 to 8, **characterized in that** a reinforcing ring (7) is arranged on the outer circumference of the strut (1) in the connecting region (5) to the threaded sleeve (6).

10. Clamping connection according to Claim 8 or 9, **characterized in that** the at least one strut-side key face (9) is arranged on the reinforcing ring (7).

11. Clamping connection according to one of Claims 1 to 10, **characterized in that** the thread pitches of the external thread (8) and the internal thread (12) of the threaded sleeve (6) are equally great.

12. Clamping connection according to one of Claims 1 to 11, **characterized in that** the external thread (8) and/or the internal thread (12) are/is secured by means of an integrally joined screw securing means.

13. Clamping connection according to one of Claims 1 to 12, **characterized in that** the threaded bolt (2) is part of a bearing component (4) of the strut element.

14. Clamping connection according to one of Claims 1 to 13, **characterized in that** the clamping connection is part of a strut, for example a steering rod or track rod for the coupling connection of chassis parts.

## Revendications

1. Assemblage à serrage d'un élément de bras pour la connexion d'accouplement de modules ou de composants, l'assemblage à serrage comprenant une région d'extrémité (5) d'un bras essentiellement tubulaire (1) ainsi qu'un boulon fileté (2),
**caractérisé par**
une douille filetée (6) munie d'un filetage extérieur conique (8) et d'un filetage intérieur (12) correspondant au boulon fileté (2), disposée dans la région d'extrémité (5) du bras tubulaire (1) dans une fente annulaire radiale entre le boulon fileté (2) et la section transversale intérieure du bras (1), l'extrémité du bras (5) présentant un filetage intérieur conique (11), correspondant au filetage extérieur (8) de la douille filetée (6), et la douille filetée (6) étant réalisée sous forme radialement élastique au moins dans la région de son extrémité (14) du côté du bras.

2. Assemblage à serrage selon la revendication 1,
**caractérisé en ce que**
le filetage extérieur (8) de la douille filetée (6) et/ou le filetage intérieur (11) du bras (1) sont réalisés sous forme de portions coniques.

3. Assemblage à serrage selon la revendication 2,
**caractérisé en ce que**
l'angle de conicité du filetage intérieur du bras (11) et du filetage extérieur de la douille filetée (8) sont identiques.

4. Assemblage à serrage selon l'une quelconque des revendications 1 à 3,
**caractérisé en ce que**
la douille filetée (6) présente, dans la région de son extrémité (14) du côté du bras, au moins une fente radiale (13).

5. Assemblage à serrage selon l'une quelconque des revendications 1 à 4,
**caractérisé en ce que**
la douille filetée (6) présente, dans la région de son extrémité (14) du côté du bras, une pluralité de fentes radiales (13) réparties uniformément le long de sa périphérie.

6. Assemblage à serrage selon la revendication 4 ou 5,
**caractérisé en ce que**
la longueur axiale de l'au moins une fente radiale (13) de la douille filetée (6) est plus grande que la moitié, de préférence plus grande que deux tiers, de la longueur de la douille filetée (6).

7. Assemblage à serrage selon l'une quelconque des revendications 1 à 6,
**caractérisé en ce que**
la douille filetée (6) présente une région d'épaulement avec au moins une surface de clé (10).

8. Assemblage à serrage selon l'une quelconque des revendications 1 à 7,
**caractérisé en ce que**
le bras (1) présente une région de clé avec au moins une surface de clé (9).

9. Assemblage à serrage selon l'une quelconque des revendications 1 à 8,
**caractérisé en ce**
**qu'**une bague de renforcement (7) est disposée sur la périphérie extérieure du bras (1) dans la région de connexion (5) à la douille filetée (6).

10. Assemblage à serrage selon la revendication 8 et la revendication 9,
**caractérisé en ce que**
l'au moins une surface de clé (9) du côté du bras est disposée sur la bague de renforcement (7).

11. Assemblage à serrage selon l'une quelconque des revendications 1 à 10,
**caractérisé en ce que**
les pas de filetage du filetage extérieur (8) et du filetage intérieur (12) de la douille filetée (6) sont identiques.

12. Assemblage à serrage selon l'une quelconque des revendications 1 à 11,
**caractérisé en ce que**
le filetage extérieur (8) et/ou le filetage intérieur (12) sont fixés au moyen d'une fixation à vis par engagement par correspondance de formes.

13. Assemblage à serrage selon l'une quelconque des revendications 1 à 12,
**caractérisé en ce que**
le boulon fileté (2) fait partie d'un composant de palier (4) de l'élément de bras.

14. Assemblage à serrage selon l'une quelconque des revendications 1 à 13,
**caractérisé en ce que**
l'assemblage à serrage fait partie d'un bras, par exemple d'une bielle de direction ou d'une barre d'accouplement pour la connexion d'accouplement de pièces de châssis.
